# EUROPÄISCHE PATENTSCHRIFT

(11) **EP 2 308 920 B1**
(45) Veröffentlichungstag und Bekanntmachung des Hinweises auf die Patenterteilung: **17.07.2013**
(21) Anmeldenummer: 10181190.9
(22) Anmeldetag: 28.09.2010
(51) Int. Cl.: C08K 5/00, C08K 5/105, C08K 5/50, C08K 5/134, C08L 69/00

(54) **Polycarbonatzusammensetzung mit verbesserter Thermostabilität**
Polycarbonate compound with improved thermal stability
Composition de polycarbonate dotée d'une stabilité thermique améliorée

(30) Priorität: 30.09.2009 DE 102009043509
(43) Veröffentlichungstag der Anmeldung: 13.04.2011
(73) Patentinhaber: Bayer Intellectual Property GmbH, 40789 Monheim (DE)
(72) Erfinder: Konrad, Stephan, 41541 Dormagen (DE); Hähnsen, Heinrich, 47228 Duisburg (DE); Köhler, Karl-Heinz, 52078 Aachen-Brand (DE); Buts, Marc, 2570 Duffel (BE); Koch, Daniel, 201507 Shanghai (CN); Guldentops, Frank, 200021 Shanghai (CN)
(74) Vertreter: BIP Patents

(56) Entgegenhaltungen:
- EP-A1- 1 266 931
- EP-A1- 1 808 462
- EP-A1- 2 009 057
- EP-A2- 0 559 953
- WO-A1-2009/106246
- WO-A2-02/085613
- DE-A1-102009 043 513

## Beschreibung

Die Erfindung betrifft eine Polycarbonat-Zusammensetzung mit verringerter Nachvergilbung der daraus hergestellten Formkörper bei Thermoalterung und mit guten optischen Eigenschaften der Polycarbonat-Zusammensetzung bei der Verarbeitung.

Die Erfindung betrifft insbesondere Zusammensetzungen aus Polycarbonat mit einem aromatischen Phosphin und einem sterisch gehinderten Phenol, wobei das Polycarbonat aus Bisphenolen und organischen Carbonaten nach dem Umesterungsverfahren in der Schmelze hergestellt wird, im folgenden "Schmelzepolycarbonat" genannt.

Polycarbonat zeichnet sich neben seinen guten mechanischen Eigenschaften u.a. durch eine hohe Transparenz und Farbbrillanz aus. Eine Möglichkeit, die Farbbrillanz zu beurteilen ist der sogenannte Yellowness Index (YI), der den Vergilbungsgrad des Materials kennzeichnet. Für hochwertiges Polycarbonat ist ein wichtiges Qualitätsmerkmal ein niedriger YI-Wert. Anwendungen von Polycarbonat auf Basis Bisphenol A (BPA) erstrecken sich über einen weiten Temperaturbereich von - 100°C bis etwa + 135°C. Insbesondere bei der Thermoalterung, d.h. bei Lagerung von Formkörpern bei erhöhten Anwendungstemperaturen von > 100°C über längere Zeiträume von Wochen bzw. Monaten an Luft, zeigt Polycarbonat mit steigender Temperatur eine sogenannte Nachvergilbung, d.h. eine Zunahme des YI-Wertes mit der Zeit. Unter Nachvergilbung (ΔYI) wird im Folgenden die Differenz des Vergilbungsgrades eines Formkörpers nach Thermoalterung, gemessen als YI-Wert am Normkörper nach ASTM D-1925, zu dem Vergilbungsgrad (als YI-Wert) eines spritzfrischen Formkörpers bezeichnet.

Ein niedriger YI-Wert ist sowohl bei der Herstellung als auch in der späteren Anwendung von großer Bedeutung. Für farbkritische Anwendungen von Polycarbonat ist es daher erstrebenswert, Polycarbonatformköper mit geringen YI-Ausgangswerten herzustellen und eine möglichst geringe Nachvergilbung während des späteren Gebrauches unter Bedingungen der Thermoalterung zu erreichen. Nachvergilbungen treten z. B. bei Scheinwerferstreuscheiben aus Polycarbonat auf, die je nach Baugröße und -form Dauertemperaturbelastungen von über 100 °C ausgesetzt sind. Für solche Anwendungen ist ein Material erforderlich, dessen optische Eigenschaften weitgehend unverändert auf hohem Niveau liegen und über die Betriebszeit möglichst wenig abfallen.

Polycarbonat kann über verschiedene Prozesse hergestellt werden. Grosstechnische Bedeutung erlangte zunächst das in Lösung über das Phasengrenzflächenverfahren aus Bisphenolen und Phosgen hergestellte Polycarbonat (LPC). Bei dem heute zunehmend an Bedeutung gewinnendem UmesterungsVerfahren werden Bisphenole mit organischen Carbonaten in der Schmelze zu so genannten Sclunelzcpolycarbonat (SPC) umgesetzt.

Dieses Schmelzepolycarbonat (SPC) weist gegenüber dem in Lösung hergestellten Polycarbonat (LPC) mehrere Unterschiede auf. Ein Unterschied des SPC ist die stärkere Nachvergilbung insbesondere bei Thermoalterung; sie ist bedingt durch erhöhte Werte an phenolischen OH- Endgruppen. Ein anderer Unterschied sind die im SPC enthaltenen Verzweigerstrukturen, die zu schlechteren Ausgangsfarben und bei Thermoalterung zu einer größeren Nachvergilbung führen.

Eine grundsätzliche Möglichkeit, die Nachvergilbung von Polycarbonat zu minimieren, ist die Verwendung von Thermostabilisatoren. Der technische Stand zur Thermostabilisierung von Polycarbonat weist im wesentlichen den Einsatz von geeigneten organischen Phosphorverbindungen wie aromatische Phosphine, aromatische Phosphite und organische Antioxidantien, insbesondere sterisch gehinderte Phenole, auf. Häufig wird die Verwendung von Phosphiten in Kombination mit sterisch gehinderten Phenolen beschrieben. Allerdings sind Hinweise zur Langzeit-Stabilisierung speziell von Schmelzepolycarbonat-Formkörpern gegen Thermoalterung an Luftsauerstoff bei der Anwendung bei Temperaturen von größer 100°C über mehrere Wochen und Monate aus dem Stand der Technik nicht zu entnehmen.

Die deutsche Offenlegungsschrift DE 44 19 897 A1 beschäftigt sich mit der Stabilisierung von Polycarbonat, hergestellt durch das Phasengrenzflächenverfahren, gegen Verfärbung bei hohen Temperaturen bei 300 °C. In dieser Schrift wird ein Gemisch aus einem Phosphin und einem gehinderten Phenol als geeignete Stabilisator-Kombination für Polycarbonat-Zusammensetzungen, auf Basis von Polycarbonat hergestellt nach dem Phasengrenzflächenverfahren, genannt. Die Beurteilung der Farbänderung der Formkörper geschieht lediglich nach dem Verarbeitungsschritt der Formmassen zu den Formkörpern, also im spritzfrischen Zustand. Allerdings schweigt sich die Offenbarungsschrift über eine sogenannte Thermoalterung aus, bei der die extrudierten Polycarbonat-Zusammensetzungen und die daraus hergestellten Formkörper über längere Zeit bei erhöhter Temperatur und Anwesenheit von Luftsauerstoff ausgesetzt werden. Das Ausmaß einer eventuellen Nachvergilbung im Sinne der vorliegenden Erfindung kann daraus nicht abgeleitet werden. In der Tat liegt keine Korrelation der Thermolagerung an Luft gegen den Yellowness Index YI-Nullwert der spritzfrischen Formkörper vor.

Aus der Offenbarung wird sehr deutlich, dass es sich um ein nach dem Phasengrenzflächenverfahren aus Phosgen und Bisphenolen hergestelltes Polycarbonat handelt. Solche sogenannten Lösungspolycarbonate (LPC) verhalten sich gegenüber sogenannten Schmelzepolycarbonaten (SPC) wie oben bereits angedeutet insofern verschieden, da die nach dem SPC-Verfahren hergestellten Polycarbonate Substrukturen aufweisen, die in einem LPC nicht vorhanden sind. LPC neigt daher weniger zu Farbänderungen bei thermischer Belastung, insbesondere bei längerer Thermoalterung, als Schmelzepolycarbonate. Es ist daher zu erwarten, dass sich ein SPC bei Thermoalterung anders verhält als ein LPC.

In der europäischen Patentanmeldung EP 559 953 A2 wird eine Mischung von organischen Phosphorverbindungen mit sterisch gehinderten Phenolen als Thermostabilisator-Mischung in der Synthese für solche Schmelzepolycarbonate genannt. Als geeignete Phosphorverbindungen werden insbesondere Phosphor-Sauerstoff-Verbindungen, wie z.B. Phosphite genannt. Reine Phosphor-Kohlenstoff-Verbindungen, wie z.B. Phosphine (Phosphane), insbesondere auch Triphenylphosphin wurden nicht als geeignet offenbart.

Es bestand daher Bedarf an geeigneten Schmelzepolycarbonat-Formmassen, die sowohl nach der Verarbeitung zu Formkörpern eine geringe Eigenfärbung (geringen YI-Wert) aufweisen, als auch bei einer Thermoalterung, wie oben beschrieben, keine nennenswerte Nachvergilbung (Delta YI-Wert, Δ YI) zeigen.

Überraschenderweise wurde aber gefunden, dass insbesondere Kombinationen von Phosphinen mit sterisch gehinderten Phenolen eine deutlich bessere thermostabilisierende Wirkung in Schmelzepolycarbonat-Formmassen aufweisen, als Kombinationen aus Phosphiten mit sterisch gehinderten Phenolen. Diese erfindungsgemäßen SPC-Formmassen, die eine Kombination bevorzugt aus einem Phosphin mit einem sterisch gehinderten Phenol enthalten, zeigen insbesondere bei Thermoalterung eine verringerte Nachvergilbung.

Gegenstand der Erfindung ist daher eine Schmelzepolycarbonat-Zusammensetzung, die ein Schmelzepolycarbonat, ein Phosphin und ein sterisch gehindertes Phenol enthält. Diese SPC-Zusammensetzung kann gegebenenfalls zusätzlich noch einen organischen Phosphorsäureester, vorzugsweise ein Alkylphosphat enthalten.

Erfindungsgemäß verwendete Phosphine sind Verbindungen der allgemeinen Formel (I): 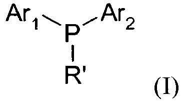 wobei Ar₁ und Ar₂ gleiche oder unterschiedliche unsubstituierte oder substituierte Arylreste sind und
R' ein unsubstituierter oder substituierter Arylrest oder einer der folgenden Reste (Ia) bis (Ih) ist 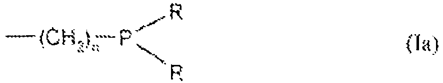 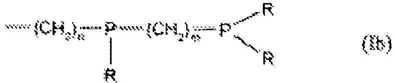 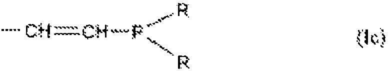 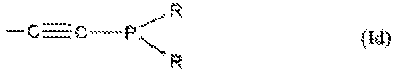 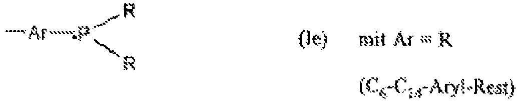 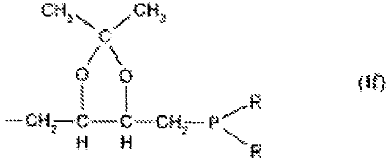 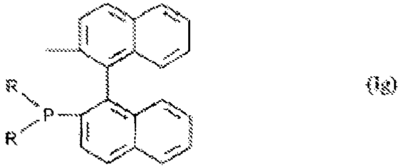 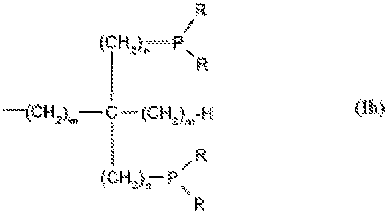 in denen R ein unsubstituierter oder substituierter C₆-C₁₄-Aryl-Rest ist und, "n" und "m" jeweils unabhängig voneinander eine ganze Zahl von 1 bis 7 sind und wobei die H-Atome der Reste (Ia) bis (Ic) noch durch Substituenten ersetzt sein können und wobei
R' noch 4-Phenyl-phenyl oder α-Naphthyl sein kann, wenn beide Ar's in Formel (I) jeweils ebenfalls 4-Phenyl-phenyl oder α-Naphthyl sind. Hierbei können die 4-Phenyl-phenyl- und die α-Naphthyl-Reste noch Substituenten tragen.

Bevorzugte Reste Ar in (I) sind Phenyl, 4-Phenyl-phenyl und Naphthyl.

Geeignete Substituenten der Arylreste Ar in (I) sind F, CH₃, Cl, Br, J, OCH₃, CN, OH, Alkylcarboxy, Phenyl, Cycloalkyl, Alkyl.

Geeignete Substituenten für die H-Atome der Reste (Ia) bis (Ic) sind F, CH₃, Alkyl, Cycloalkyl, Cl, Aryl.

Bevorzugte Zahlen "n" und "m" sind 1, 2, 3 oder 4.

Aryl steht jeweils unabhängig für einen aromatischen Rest mit 4 bis 24 Gerüstkohlenstoffatomen, in denen keines, ein, zwei oder drei Gerüstkohlenstoffatome pro Zyklus (aromatischer Ring aus C-Atomen), im gesamten Molekül mindestens jedoch ein Gerüstkohlenstoffatom, durch Heteroatome, ausgewählt aus der Gruppe Stickstoff, Schwefel oder Sauerstoff, substituiert sein können. Vorzugsweise bedeutet Aryl jedoch einen carbozyklischen aromatischen Rest mit 6 bis 24 Gerüstkohlenstoffatomen. Gleiches gilt für den aromatischen Teil eines Arylalkyl-Restes sowie für Arylbestandteile komplexerer Gruppen, (wie z.B. Aryl-carbonyl- oder Aryl-sulfonyl-Resten.)

Beispiele für C₆-C₂₄-Aryl sind Phenyl, o-, p-, m-Tolyl, Naphthyl, Phenanthrenyl, Anthracenyl oder Fluorenyl. Beispiele für heteroaromatisches C₄-C₂₄-Aryl in denen keines, ein, zwei oder drei Gerüstkohlenstoffatome pro Zyklus, im gesamten Molekül mindestens jedoch ein Gerüstkohlenstoffatom, durch Heteroatome, ausgewählt aus der Gruppe Stickstoff, Schwefel oder Sauerstoff, substituiert sein können, sind beispielsweise Pyridyl, Pyridyl-N-Oxid, Pyrimidyl, Pyridazinyl, Pyrazinyl, Thienyl, Furyl, Pyrrolyl, Pyrazolyl, Imidazolyl, Thiazolyl, Oxazolyl oder Isoxazolyl, Indolizinyl, Indolyl, Benzo[b]thienyl, Benzo[b]furyl, Indazolyl, Chinolyl, Isochinolyl, Naphthyridinyl, Chinazolinyl, Benzofuranyl oder Dibenzofuranyl.

Erfindungsgemäß geeignete Phosphine sind z.B. Triphenylphosphin, Tritolylphosphin, Tri-p-tert.-butylphenylphosphin oder deren Oxide. Bevorzugt wird als Phosphin Triphenylphosphin eingesetzt.

Beispiele für die erfindungsgemäß einzusetzenden Diarylphosphine sind 1,2-Bis-(di-pentafluophenyl-phosphino)-ethan, Bis-(diphenyl-phosphino)-acetylen, 1,2-Bis-(diphenylphosphino)-benzol,

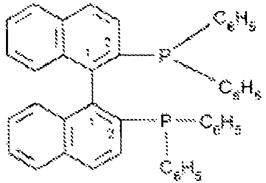

[2,2'-Bis-(diphenylphosphino)-1,1'-binaphthyl], 2,3-Bis-(diphenylphosphino)-butan, 1,4-Bis-(diphenylphosphino)-butan, 1,2-Bis-(diphenylphosphino)-ethan, cis-1,2-Bis-(diphenylphosphino)-ethylen.

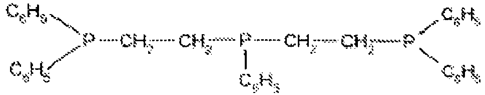

[Bis-(2-(diphenylphosphino)-ethyl)-phenylphosphin], Bis-(diphenylphosphino)-methan, 2,4-Bis-(diphenylphosphino)-pentan, 1,3-Bis-(diphenylphosphino)-propan, 1,2-Bis-(diphenylphosphino)-propan,

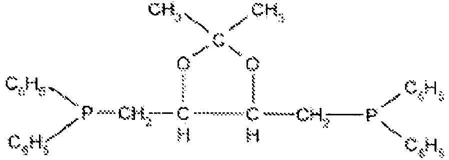

[4,5-O-Isopropyliden-2,3-dihydroxy- 1,4-bis-(diphenylphosphino)-butan], Tri-(4-diphenyl)-phosphin und Tris-(α-naphthyl)-phosphin.

Die Diarylphosphine können nach den folgenden Literaturhinweisen hergestellt werden:

Issleib et al., Chem. Ber., 92(1959), 3175 - 3182 und Hartmann et al., Zeitschr. Anorg. Ch. 287(1956) 261 - 272.

Es können auch Mischungen aus verschiedenen Phosphinen verwendet werden. Die verwendeten Phosphine werden in Mengen von 10 bis 2000 mg/kg, bevorzugt von 30 bis 800 mg/kg, besonders bevorzugt von 50 bis 500 mg/kg, bezogen auf das Gesamtgewicht der Zusammensetzung, eingesetzt.

Die erfindungsgemäßen Formmassen können neben den eingesetzten Phosphinen auch die entsprechenden Phosphinoxide enthalten.

Erfindungsgemäß optional verwendete Alkylphosphate sind Verbindungen der allgemeinen Fonnel (II): 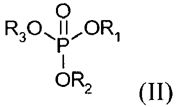 wobei R₁ bis R₃ H, gleiche oder unterschiedliche linerare, verzweigte oder zyklische Alkylreste sein können. Besonders bevorzugt sind C₁-C₁₈ Alkylreste. C₁-C₁₈-Alkyl steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl oder n-Octadecyl.

Erfindungsgemäß geeignete Alkylphosphate sind z.B. Mono-, Di- und Trihexylphosphat, Triisoctylphosphat und Trinonylphosphat. Bevorzugt wird als Alkylphosphat Triisooctylphosphat (Tris - 2-ethyl-hexyl-phosphat) verwendet. Es können auch Mischungen aus verschiedenen Mono-, Di- und Trialkylphosphaten verwendet werden. Die verwendeten Alkylphosphate werden in Mengen von weniger als 500 mg/kg, bevorzugt von 0,5 bis 500 mg/kg, besonders bevorzugt 2 bis 500 mg/kg, bezogen auf das Gesamtgewicht der Zusammensetzung eingesetzt.

Mögliche sterisch gehinderte Phenole sind zum Beispiel Ester von ß-(3,5-Di-tert.-butyl-4-hydroxyphenyl)propionsäure oder ß-(5-tert.-Butyl-4-hydroxy-3-methylphenyl)propionsäure oder β-(3,5-Dicyclohexyl-4-hydroxyphenyl)propionsäure mit ein- oder mehrwertigen Alkoholen, z. B. mit Methanol, Ethanol, Butanol, n-Octanol, i-Octanol, n-Octadecanol. 1,6-Hexandiol, 1,9-Nonandiol, Ethylenglycol, 1,2-Propandiol, Neopentylglycol, Diethylenglycol, Triethylenglycol, Tris-(hydroxyethyl)isocyanurat, N,N'-Bis(Hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan.

Besonders geeignet wird als sterisch gehindertes Phenol n-Octadecyl-3-(3,5-di-t.butyl-4-hydroxyphenyl)-propionat verwendet. Das sterisch gehinderte Phenol wird bevorzugt in Mengen von 10 bis 800 mg/kg, besonders bevorzugt von 30 bis 500 mg/kg, ganz besonders bevorzugt von 40 bis 400 mg/kg, bezogen auf das Gesamtgewicht der Zusammensetzung, eingesetzt.

Das erfindungsgemäß einzusetzende Polycarbonat wird durch die Schmelzumesterungsreaktion geeigneter Bisphenole und Kohlensäurediarylester in Gegenwart eines geeigneten Katalysators hergestellt. Die Herstellung aromatischer Polycarbonate nach dem Schmelzumesterungsverfahren ist bekannt und beispielsweise beschrieben in "Schnell", Chemistry and Physics of Polycarbonates, Polymer Reviews, Vol. 9, Interscience Publishers, New York, London, Sydney 1964, in D.C. Prevorsek, B.T. Debona and Y. Kersten, Corporate Research Center, Allied Chemical Corpration, Moristown, New Jersey 07960, "Synthesis of Poly(ester)carbonate Copolymers" in Journal of Polymer Science, Polymer Chemistry Edition, Vol. 19, 75-90 (1980), in D. Freitag, U. Grigo, P.R. Müller, N. Nouvertne, BAYER AG, "Polycarbonates" in Encyclopedia of Polymere Science and Engineering, Vol. 11,Second Edition, 1988, Seiten 648-718 und schließlich in Dres. U. Grigo, K. Kircher und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299.

Das Polycarbonat kann auch durch die Kondensation von Carbonatoligomeren, die Hydroxy- und/oder Carbonatendgruppen enthalten, und geeigneten Kohlensäurediarylestern und Bisphenolen hergestellt werden. Bevorzugte Carbonatoligomere werden durch die Formel (IV) mit Molekulargewichten von 153 bis 15.000 [g/mol] beschrieben. 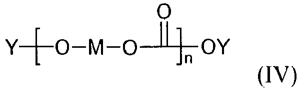 wobei Y = H oder ein unsubstituierter oder substituierter Arylrest ist.

Geeignete Kohlensäurediarylester im Zusammenhang mit der Erfindung sind Di-C₆- bis Di-C₁₄-arylester, vorzugsweise die Diester von Phenol oder von alkyl- oder aryl-substituierten Phenolen, d.h. Diphenylcarbonat, Dikresylcarbonat und Di-4-tert-butylphenylcarbonat. Am meisten bevorzugt ist Diphenylcarbonat.

Zu den geeigneten Di-C₆ bis Di-C₁₄-arylestern gehören auch unsymmetrische Diarylester, die zwei verschiedene Arylsubstituenten enthalten. Bevorzugt sind Phenylkresylcarbonat und 4-tert-Butylphenylphenylcarbonat.

Zu den geeigneten Diarylestern gehören auch Gemische von mehr als einem Di-C₆-C₁₄ - arylester. Bevorzugte Gemische sind Gemische von Diphenylcarbonat, Dikresylcarbonat und Di-4-tert-butylphenylcarbonat.

Bezogen auf 1 Mol Diphenol, können die Kohlensäurediarylester in Mengen von 1,00 bis 1,30 Mol, besonders bevorzugt in Mengen von 1,02 bis 1,20 Mol und am meisten bevorzugt in Mengen von 1,05 bis 1,15 Mol verwendet werden.

Geeignete Dihydroxyarylverbindungen im Zusammenhang mit der Erfindung sind solche, die der Formel (V) entsprechen: 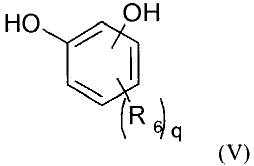 worin
R₆ ein substituiertes oder unsubstituiertes Phenyl, Methyl, Propyl, Ethyl, Butyl, Cl oder Br ist und q für 0, 1 oder 2 steht.

Bevorzugte Dihydroxybenzolverbindungen sind 1,3-Dihydroxybenzol, 1,4-Dihydroxybenzol und 1,2-Dihydroxybenzol.

Geeignete Dihydroxydiarylverbindungen im Zusammenhang mit der Erfindung sind solche, die der Formel (VI) entsprechen: 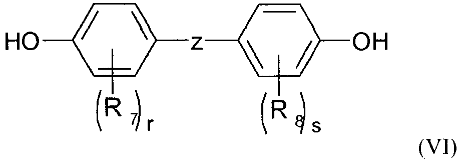 wobei
- Z: C₁ bis C₈-Alkyliden oder C₅ bis C₁₂-Cycloalkyliden, S, SO₂ oder eine Einfachbindung,
- R₇, R₈: unabhängig voneinander ein substituiertes oder unsubstituiertes Phenyl, Methyl, Propyl, Ethyl, Butyl, Cl oder Br ist und
- r, s: unabhängig voneinander für 0, 1 oder 2 steht.

Bevorzugte Diphenole sind 4,4'-Dihydroxydiphenyl, 4,4'-Dihydroxydiphenylsulfid, 1,1 Bis(4-hydroxphenyl)cyclo-hexan, 1,2-Bis(4-hydroxyphenyl)benzol, 1,3-Bis(4-hydroxyphenyl)benzol, 1,4-Bis(4-hydroxyphenyl)benzol, Bis(4-hydroxyphenyl)methan, 2,2-Bis(4-hydroxyphenyl) propan, 2,4-Bis(4-hydroxyphenyl)-2-methylbutan, 2,2-Bis(3-methyl-4-hydroxy-phenyl)-propan, 2,2-Bis(3-chlor-4-hydroxyphenyl)propan, Bis(3,5-dimethyl-4-hydroxy-phenyl)methan, 2 , 2-Bis(3,5-dimethyl-4-hydoxyphenyl)propan, Bis(3,5-dimethyl-4-hydroxyphenyl)sulfon, Bis(4hydroxyphenyl)sulfon, 1,2-Bis[2-(4-hydroxyphenyl)isopropyl]benzol, 1,3-Bis[2-(4-hydroxyphenyl)isopropyl]benzol, 1,4-Bis[2-(4-hydroxyphenyl)isopropyl]benzol, 1,1-Bis(4-hydroxyphenyl)-1-phenylethan, 2,4-Bis(4-hydroxyphenyl)-2-methylbutan, 2,2-Bis-(3,5-dichlor-4-hydroxyphenyl)-propan, 2,2-Bis(3,5-dibrom-4-hydroxyphenyl) propan, 1,1-Bis(4-hydroxyphenyl)-3,3,5-trimethylcyclohexan.

Die am meisten bevorzugten Diphenole sind 1,1-Bis(4-hydroxyphenyl)-1-phenylethan, 2,2-Bis(4-hydroxyphenyl)propan, 4,4'-Dihydroxydiphenyl, 1,1-Bis(4-hydroxyphenyl)-3,3,5-trimethylcyclohexan, 2,2-Bis(3,5-dibrom-4-hydroxyphenyl)propan und 1,3-Bis[2-(4-hydroxyphenyl)isopropyl] benzol.

Zu den geeigneten Diphenolen gehören auch Gemische von mehr als einem Diphenol; dabei würde ein Copolycarbonat entstehen. Die am meisten bevorzugten Mischpartner sind 1,3-Bis[2-(4-hydroxyphenyl)isopropyl]benzol, 1,1-Bis(4-hydroxyphenyl)-3,3,5-trimethylcyclohexan, 2,2-Bis(4-hydroxyphenyl)propan, 4,4'-Dihydroxydiphenyl und 2,2-Bis(3,5-dibrom-4-hydroxyphenyl)propan.

Zusätzlich kann ein Verzweigungsmittel hinzugefügt werden, wie z.B. Verbindungen, die drei funktionelle phenolische OH-Gruppen enthalten. Durch die Verzweigung würde das nicht-Newtonsche Fließverhalten erhöht. Zu den geeigneten Verzweigungsmitteln gehören Phloroglucin, 3,3-Bis(3-methyl-4-hydroxyphenyl)-2-oxo-2,3-dihydroindol, 4,6-Dimethyl-2,4,6-tris(4-hydroxyphenyl)hepten-2 , 4 , 6-Dimethyl-2,4,6-tris(4-hydroxyphenyl)-heptan, 1,3,5-Tris-(4-hydroxyphenyl) benzol, 1,1,1-Tris(4-hydroxyphenyl) ethan,Tris (4-hydroxypheiryl)phenylmethan, 2,2-Bis[4,4-bis(4-hydroxyphenyl)cyclohexyl]propan, 2,4-Bis-(4-hydroxyphenylisopropyl)phenol, 2,6-Bis(2-hydroxy-5'-methylbenzyl)-4-methylphenol, 2-(4-hydroxyphenyl)-2-(2,4-dihydroxyphenyl)propan, Hexakis(4-(4-hydroxyphenylisopropyl)phenyl)orthoterephthalat, Tetrakis(4-hydroxyphenyl)methan, Tetrakis(4-(4-hydroxyphenylisopropyl)phenoxy)methan, 1,4-Bis((4',4"-dihydroxytriphenyl)methyl)benzol und Isatinbiskresol, Pentaerythrit, 2,4-Dihydroxybenzoesäure, Trimesinsäure, Cyanursäure.

Zur Herstellung der erfindungsgemäßen Polycarbonate geeignete Katalysatoren sind beispielsweise solche der allgemeinen Formel (VII) 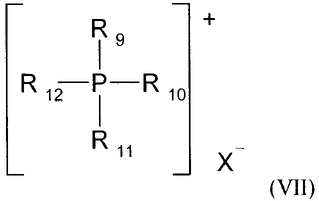 worin

R₉, R₁₀, R₁₁ und R₁₂ unabhängig voneinander die gleichen oder verschiedene C₁- bis C₁₈-Alkylene, C₆ bis C₁₀-Aryle oder C₅ bis C₆-Cycloalkyle bezeichnen können und X- für ein Anion stehen kann, bei dem das entsprechende Säure-Base-Paar H⁺ + X → HX ein pK_{b} von < 11 hat.

Bevorzugte Katalysatoren sind Tetraphenylphosphoniumfluorid, Tetraphenylphosphoniumtetraphenylborat und Tetraphenylphosphoniumphenolat. Am meisten bevorzugt ist Tetraphenylphosphoniumphenolat. Bevorzugte Mengen an Phosphoniumsalzkatalysatoren sind beispielsweise 10⁻² bis 10⁻⁸ Mol pro Mol Diphenol und die am meisten bevorzugten Katalysatonnengen sind 10⁻⁴ bis 10⁻⁶ Mol pro Mol Diphenol. Es können zudem gegebenenfalls Cokatalysatoren zusätzlich zu dem oder den Phosphoniumsalz(en) verwendet werden, um die Geschwindigkeit der Polymerisation zu erhöhen.

Solche Cokatalysatoren können beispielsweise Salze von Alkalimetallen und Erdalkalimetallen, wie Hydroxide, Alkoxide und Aryloxide von Lithium, Natrium und Kalium, vorzugsweise Hydroxid-, Alkoxid- oder Aryloxidsalze von Natrium sein. Am meisten bevorzugt sind Natriumhydroxid und Natriumphenolat. Die Mengen des Cokatalysators können beispielsweise im Bereich von 1 bis 200 µg/kg, vorzugsweise 5 bis 150 µg/kg und am meisten bevorzugt 10 bis 125 µg/kg jeweils bezogen auf die eingesetzte Masse der Dihydroxydiarylverbindung liegen, jeweils berechnet als Natrium.

Die erfindungsgemäßen bevorzugt verwendeten SPC werden vorzugsweise ohne die Verwendung von Cokatalysatoren hergestellt.

Die Polycarbonate können stufenweise hergestellt werden, die Temperaturen können in jeder Stufe im Bereich von 150 bis 400°C liegen, die Verweilzeit in jeder Stufe kann 15 Minuten bis 5 Stunden betragen, und die Drücke in jeder Stufe können 1000 bis 0,01 mbar betragen. Besonders bevorzugt nimmt die Temperatur von einer Stufe zur anderen zu und der Druck von einer zur nächsten Stufe ab.

Typischerweise liegen die phenolischen OH-Werte des SPC in der Größenordnung von mehreren hundert mg/kg; im Gegensatz zu einem LPC, dessen phenolische OH-Werte typischerweise in einem Bereich von ≤ 100 mg/kg betragen. Niedrigere Gehalte an phenolischen OH-Endgruppen können beim SPC bislang großtechnisch nicht ohne weiteres hergestellten werden.

Die bevorzugt verwendeten Schmelzepolycarbonate sind gekennzeichnet durch die allgemeine Fonnel (IV) 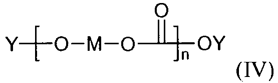 wobei die eckige Klammer sich wiederholende Struktureinheiten bezeichnet, M für Ar oder eine multifunktionelle Verbindung A, B, C sowie Verbindung D steht, wobei Ar eine Verbindung sein kann, die durch Formel (VIII) oder (IX) dargestellt wird, bevorzugt (IX) 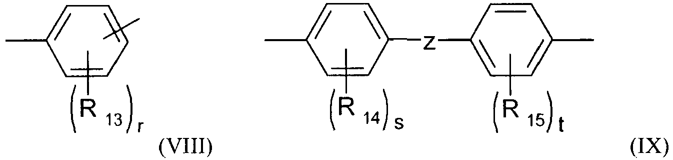 worin
- Z: C₁ bis C₈-Alkyliden oder C₅ bis C₁₂-Cycloalkyliden, S, SO₂ oder eine Einfachbindung ist,
- R₁₃, R₁₄, R₁₅: unabhängig voneinander ein substituiertes oder unsubstituiertes C₁ - C₁₈ Alkylrest ist, bevorzugt ein substituiertes oder unsubstituiertes Phenyl, Methyl, Propyl, Ethyl, Butyl, Cl oder Br ist und
- r, s, t: unabhängig voneinander für 0, 1 oder 2 steht,
wobei die multifunktionelle Verbindung A eine Verbindung der Formel 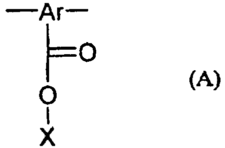 ist, wobei die multifunktionelle Verbindung B eine Verbindung der Formel 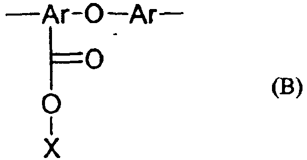 ist, wobei die multifunktionelle Verbindung C eine Verbindung der Formel 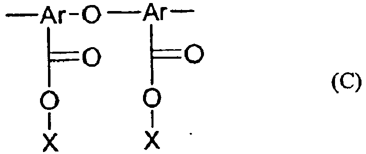 ist, wobei Verbindung D eine Verbindung der Formel 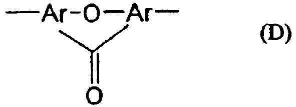 ist, und die Summe von multifunktionellen Verbindungen A, B, C und D ≥ 5 mg/kg ist, wobei Y = H oder eine Verbindung der Formel (X) 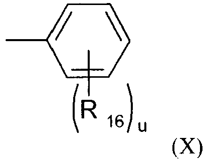 ist, wobei
- R₁₆: gleich oder verschieden H, C₁ bis C₂₀-Alkyl, C₆H₅ oder C(CH₃)₂C₆H₅, und
- u: 0, 1, 2 oder 3 sein kann,
wobei X = Y oder -[MOCOO]ₙ-Y ist, wobei M und Y die oben angegebene Bedeutung haben.

Das erfindungsgemäße eingesetzte Polycarbonat kann ein durch Gelpermeationschromatographie bestimmtes Mittel des Molekulargewichts von 5.000 bis 80.000, vorzugsweise 10.000 bis 60.000 und in am meisten bevorzugter Weise 15.000 bis 40.000 aufweisen.

Vorzugsweise hat Ar die folgende Bedeutung:

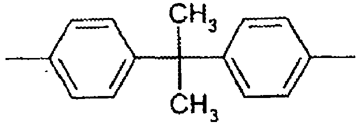

Vorzugsweise ist die multifunktionelle Verbindung A die Verbindung A1:

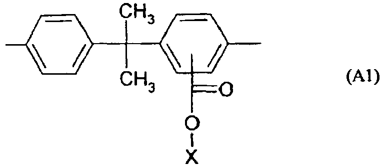

Vorzugsweise ist die Verbindung B die Verbindwig B1:

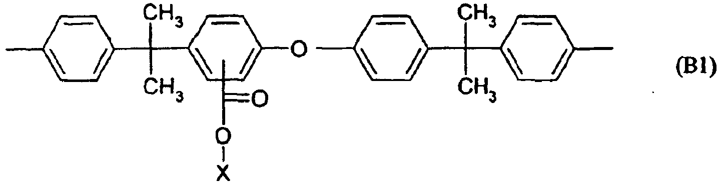

Vorzugsweise ist die multifunktionelle Verbindung C die Verbindung C1:

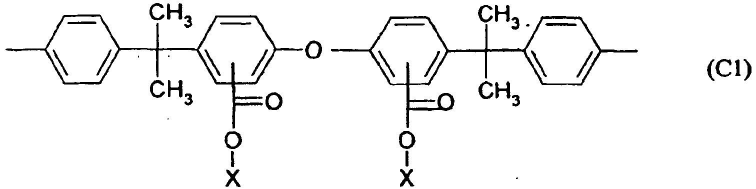

In den Verbindungen A1, B1 und C1 hat X die oben angegebene Bedeutung. Vorzugsweise ist die Verbindung D die Verbindung D1:

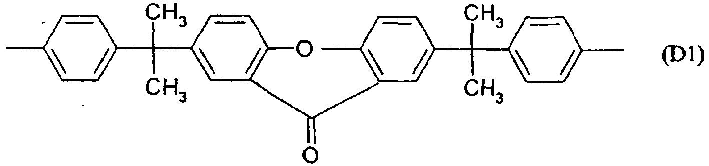

Die zuvor beschriebenen Schmelzepolycarbonate sind nur beispielhaft genannt. Die Anteile der Komponenten A bis D sind in Summe in Mengen ≥ 5 mg/kg im Schmelzepolycarbonat enthalten Die Bestimmung der Konzentration der Verbindungen A1, B1, C1 und D1 erfolgt nach alkalischer Hydrolyse des Polycarbonats und anschließender Analyse des Hydrolysates per HPLC. Die Verbindungen wurden durch Kernmagnetresonanzspektroskopie charakterisiert.

Die erfindungsgemäßen Zusammensetzungen (Schmelzepolycarbonat-Formmassen) können beispielsweise hergestellt werden, indem man die jeweiligen Bestandteile in bekannter Weise vermischt und bei Temperaturen von 200°C bis 400°C in üblichen Aggregaten wie Innenknetern, Extrudern und Doppelwellenschnecken schmelzcompoundiert und schmelzextrudiert. Die Vermischung der einzelnen Bestandteile kann sowohl sukzessive als auch simultan erfolgen und zwar sowohl bei etwa 20°C (Raumtemperatur) als auch bei höherer Temperatur. Die erfindungsgemäß eingesetzten Verbindungen können aber auch separat in unterschiedlichen Stadien des Herstellprozesses in die Schmelzepolycarbonat-Formmasse eingebracht werden. So können z.B. das Alkylphosphat und / oder das Phosphin bereits während oder am Ende der Umesterung von Bisphenolen mit organischen Carbonaten, vor oder während der Bildung von oligomeren Polycarbonaten, oder vor bzw. nach der Polykondensation der SPC-Oligomeren in das Schmelzepolycarbonat eingebracht werden, bevor ein sterisch gehindertes Phenol hinzugesetzt wird. Wahlweise kann das sterisch gehinderte Phenol als fertige Mischung auch gemeinsam mit dem Phosphin und / oder mit dem Alkylphosphat in das SPC an beliebiger Stelle dosiert werden. Auch eine Umkehrung der obigen Reihenfolge der Dosierung der Komponenten ist möglich.

Die Zugabeform der erfindungsgemäßen Verbindungen ist nicht limitiert. Die erfindungsgemäßen Verbindungen bzw. Mischungen der erfindungsgemäßen Verbindungen können als Feststoffe, z.B. als Pulver, als Konzentrat in Polycarbonatpulver, in Lösung oder als Schmelze der Polymerschmelze zugesetzt werden. Bevorzugt erfolgt die Dosierung der organischen Phosphorverbindungen und des sterisch gehinderten Phenols über eine Schmelzedosierpumpe, oder einen Seitenextruder hinter der letzten Polykondensationsstufe. In großtechnischen Ausführungsformen wird besonders bevorzugt ein Seitenextruder mit einem Durchsatz von beispielsweise 200 - 1000 kg Polycarbonat pro Stunde betrieben.

In einer bevorzugten Ausführungsform erfolgt die optionale Dosierung von Alkylphosphaten beispielsweise bei Raumtemperatur in flüssiger Form gemeinsam mit Polycarbonat in den Trichter der Polycarbonat-Aufgabe des Seitenextruders. Die Menge an Alkylphosphat wird z.B. mit Hilfe einer Membranpumpe oder einer anderen geeigneten Pumpe dosiert. Die Zugabe von Phosphinen oder Mischungen von Phosphinen mit sterisch gehindertem Phenol erfolgt bevorzugt in flüssiger Form bei einer Temperatur von ca. 80 bis 250°C hinter den Trichter der Polycarbonat-Aufgabe in eine Zone des Extruders, die mit Mischelementen ausgestattet ist. Dabei erfolgt die Entnahme der Phosphine oder der Mischung von Phosphinen mit sterisch gehindertem Phenol aus einer Ringleitung, die bevorzugt auf einen Druck von 2-20 bar bevorzugt bei einer Temperatur von 80 - 250 °C gehalten wird. Die zugesetzte Menge kann über ein Regelventil gesteuert werden.

In einer besonders bevorzugten Ausführungsform befindet sich hinter dem Seitenextruder und allen Additiv-Dosierstellen ein statischer Mischer, um eine gute Durchmischung aller Additive zu gewährleisten. Die Polycarbonat-Schmelze des Seitenextruders wird dann in den Polycarbonat-Hauptschmelzestrom eingetragen. Die Vermischung des Hauptschmelzestroms mit dem Schmelzestrom des Seitenextruders erfolgt über einen weiteren statischen Mischer.

Alternativ zur Flüssigdosierung können die Phosphine und sterisch gehinderten Phenole in Form eines Masterbatches (Konzentrat der Additive in Polycarbonat) oder in reiner, fester Form über den Trichter der Polycarbonataufgabe des Seitenextruders dosiert werden. Ein solches Masterbatch kann weitere Additive enthalten.

Alle Additive können auch nachträglich zum Beispiel durch Compoundierung in das Polycarbonat eingebracht werden.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele der erfindungsgemäßen Formkörper sind Profile, Folien, Gehäuseteile jeder Art, z.B. für Haushaltsgeräte wie Saftpressen, Kaffeemaschinen, Mixer; für Büromaschinen wie Monitore, Drucker, Kopierer; für Platten, Rohre, Elektroinstallationskanäle, Fenster, Türen und Profile für den Bausektor, Innenausbau und Außenanwendungen; auf dem Gebiet der Elektrotechnik z.B. für Schalter und Stecker. Ferner können die erfindungsgemäßen Formkörper für Innenaus- und Bauteile von Schienenfahrzeugen, Schiffen, Flugzeugen, Bussen und anderen Kraftfahrzeugen sowie für Kfz-Karosserieteile verwendet werden.

Die erfindungsgemäßen Formkörper können transparent, translucent oder opak sein. Weitere Formkörper sind insbesondere optische und magnetooptische Datenspeicher wie Mini Disk, Compact Disk (CD) oder Digital Versatile Disk (DVD), Lebensmittel- und Getränkevepackungen, optische Linsen und Prismen, Linsen für Beleuchtungszwecke, Autoscheinwerferlinsen, Verglasungen für Bau- und Kraftfahrzeuge, Verscheibungen anderer Art wie für Gewächshäuser, sogenannte Stegdoppelplatten oder Hohlkammerplatten.

### Beispiele

Die nachfolgenden Beispiele erläutern die Erfindung, ohne sie jedoch dadurch einzuschränken.

### Phenolische OH-Endgruppen

Der Gehalt an phenolischen OH Endgruppen wurde nach der Titan(IV)-Chlorid Methode bestimmt (A. Horbach, U. Veiel und H. Wunderlich, "Endgruppenbestimmung an aromatischen Polycarbonaten", Die Makromolekulare Chemie, 88, 215-231, 1965).

Die Angabe phenolische OH Endgruppen erfolgt in mg (OH) pro kg Polycarbonat.

### Verbindungen A1, B1, C1 und D 1

Die Bestimmung der Konzentration der Verbindungen A1, B1, C1 und D1 erfolgt nach alkalischer Hydrolyse des Polycarbonats und anschließender Analyse des Hydrolysates per HPLC. Die Verbindungen wurden durch Kernmagnetresonanzspektroskopie charakterisiert.

### YI, und Nachvergilbung (ΔYI)

Die Bestimmung der optischen Eigenschaften der erfindungsgemäßen Formmassen geschieht durch Messung des sogenannten Yellowness-Index (YI) an Normprüfkörpern nach ASTM E313. Diese Normprüfkörper sind Farbmusterplatten (60* 40* 4 mm), die aus den SPC-Zusammensetzungen bei einer Massetemperatur von 300 °C und einer Werkzeugtemperatur von 90 °C hergestellt wurden. Die Nachvergilbung (ΔYI) wird bestimmt als die Differenz aus dem gemessenen YI-Wert der spritzfrischen Farbmusterplatten und dem gemessenen YI-Wert derselben Farbmusterplatten nach Thermolagerung.

### Thermolagerung

Zur Thermolagerung werden Normprüfkörper aus Polycarbonat (60x40x4 mm) in einem Umluftofen für 1000 Stunden bei 135°C gelagert. Anschließend wird der YI nach ASTM E313 bestimmt. Die Differenz zur Nullprobe (vor Lagerung) wird berechnet (=ΔYI 1000 h).

### MVR

Die Bestimmung der Schmelze-Volumenfließrate (MVR) erfolgt bei 300°C und 1,2 kg Belastung mit einem Schmelzindexprüfgerät nach ISO 1133.

### Herstellung der erfindungsgemäßen SPC-Zusammensetzungen

Die erfindungsgemäßen Compounds wurden auf einem Extruder EV32HT der Fa. Clextral, mit einem Durchsatz von 50 kg/Std. hergestellt. Die Schmelzetemperatur betrug 320 °C. Die verschiedenen Additive wurden in Form einer Pulvermischung mit Polycarbonatpulver (PC 2, s.u. verwendete Rohstoffe) - 5 Gew.-% bezogen auf die Gesamteinwaage - zudosiert.

### Verwendete Rohstoffe:

| | |
|---|---|
| TPP: | Triphenylphosphin |
| Irgafos 168: | Tris(2,4-tert-butylphenyl) phosphit |
| Irganox 1076: | n-Octadecyl-3-(3,5-di-t.butyl-4-hydroxyphenyl)-propionat |
| Irgafos B900: | Mischung aus vier Teilen Irgafos 168 und einem Teil Irganox 1076 |
| Irganox 1010: | Pentaerythritol 4-hydroxy-3,5-di-tert-butylphenylpropionat |
| Irganox 1035: | Thiodiethylen bis[3-(3,5-di-tert-butyl-4-hydroxyphenyl)-propionat |
| Dovephos S9228: | Bis(2,4-dicumylphenyl) pentaerythritol diphosphit |

**PC 1 (SPC)** ist ein Polycarbonat ohne Additive auf Basis von Bisphenol A und DPC mit einer Schmelze-Volumenfließrate (MVR) von 11,4 cm³/10 min (300°C/1,2 kg). Multifunktionelle Verbindungen A1 : 370 ppm, B1 : 35 ppm, C1 : 11 ppm, D1 : 67 ppm. Der Gehalt an Phenolischen OH-Endgruppen beträgt 330 mg/kg.

**PC 2 (LPC)** ist ein Polycarbonat ohne Additive auf Basis von Bisphenol A mit einem MVR von 19 cm³/10 min (300°C/1,2 kg) in Pulverform; es dient der Herstellung homogener Pulverkonzentrate der festen und flüssigen Additive in Polycarbonat. Multifunktionelle Verbindungen A, B, C und D unterhalb der Nachweisgrenze.

**Tabelle 1** zeigt die verschiedenen Zusammensetzungen der Beispiele sowie den YI-Ausgangswert im spritzfrischen Zustand und den Nachvergilbungswert ΔYI nach 1000 h Lagerung bei 135°C in Luft. Erfindungsgemäße Beispiele sind die Beispiele 3, 13, 14 und 21. Die übrigen Beispiele dienen zum Vergleich.

Wie die Beispiele zeigen, ist der YI Ausgangswert der SPC-compounds im spritzfrischen Zustand bei der Verwendung von Thermostabilisatoren grundsätzlich besser als ohne die Verwendung von Thermostabilisatoren. Dies wird aus dem Vergleich der Beispiele 2-11 und 13-21 mit den Beispielen 1 und 12 ersichtlich. Allerdings ist die Nachvergilbung ΔYI nach 1000 h Lagerung bei 135°C in Luft nicht mit den YI Ausgangswerten korreliert und damit aus diesem Grund nicht vorhersagbar. Der Korrelationskoeffizient für die lineare Regression der Auftragung ΔYI gegen YI-Nullwert ist nur r² = 0,001 und beweist, dass keine Korrelation dieser beiden Größen vorliegt.

Die erfindungsgemäßen Beispiele 3, 13, 14 und 21 zeigen die niedrigste Nachvergilbung bei der Thermolagerung im Vergleich aller getesteten Kombinationen auf Basis von SPC. Allein die ΔYI-Werte der erfindungsgemäßen Beispiele 3, 13, 14 und 21 liegen nach 1000 h bei ΔYI < 4,8.

Überraschenderweise sind die Kombinationen aus Phosphin mit n-Octadecyl-3-(3,5-di-t.butyl-4-hydroxyphenyl)-propionat (Beispiele 3, 13, 14 und 21) den Kombinationen aus Phosphit und n-Octadecyl-3-(3,5-di-t.butyl-4-hydroxyphenyl)-propionat (Beispiele 8, 9 und 10) bezüglich der Nachvergilbung beim Schmelzepolycarbonat überlegen. Beispiel 10 belegt sogar überraschenderweise eine Verschlechterung der Nachvergilbung bei der Kombination von Phosphiten mit sterisch gehindertem Phenol im Vergleich zur unstabilisierten Probe.

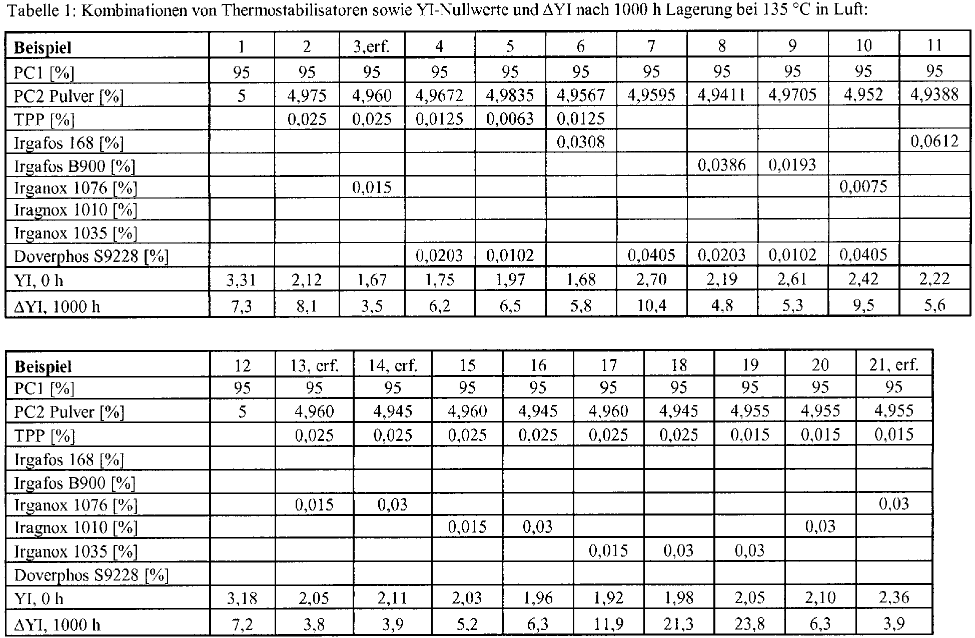

Beispiele 1 - 11: erste Versuchsreihe. Beispiele 12 - 21: zweite Versuchsreihe
Beispiel 12 ist eine Reproduktion von Beispiel 1; Beispiel 13 ist eine Reproduktion von Beispiel 3.

## Patentansprüche

1. Zusammensetzung, enthaltend ein Schmelzepolycarbonat, wenigstens ein Phosphin und n-Octadecyl-3-(3,5-di-t.butyl-4-hydroxyphenyl)-propionat, **dadurch gekennzeichnet, dass** das verwendete Phosphin Verbindungen der Formel (I) sind: 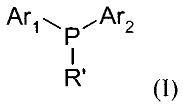 wobei Ar₁ und Ar₂ gleiche oder unterschiedliche unsubstituierte oder substituierte Arylreste sind und
R' ein unsubstituierter oder substituierter Arylrest oder einer der folgenden Reste (la) bis (Ih) ist 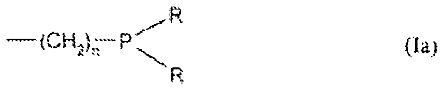 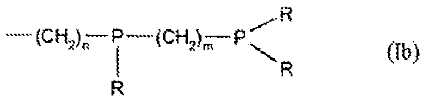 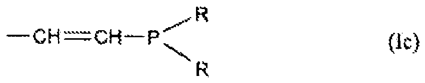 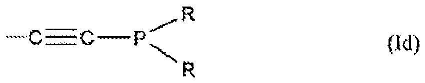 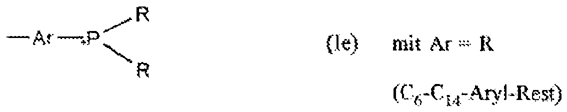 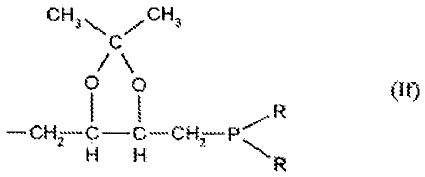 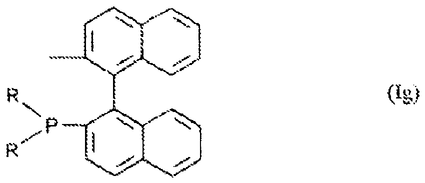 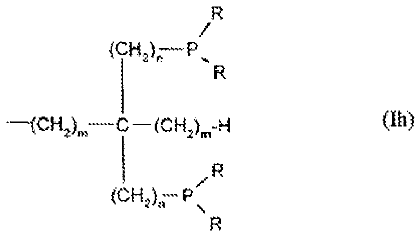 in denen R ein unsubstituierter oder substituierter C6-C14-Aryl-Rest ist und, "n" und "m" jeweils unabhängig voneinander eine ganze Zahl von 1 bis 7 sind und wobei die H-Atome der Reste (Ia) bis (Ic) noch durch Substituenten ersetzt sein können und wobei
R' noch substituiertes oder unsubstituiertes 4-Phenyl-phenyl oder substituiertes oder unsubstituiertes α-Naphthyl sein kann, wenn beide Ar's in Formel (I) jeweils ebenfalls substituiertes oder unsubstituiertes 4-Phenyl-phenyl oder substituiertes oder unsubstituiertes α-Naphthyl sind.

2. Zusammensetzung nach Anspruch 1, enthaltend wenigstens ein Alkylphosphat, **dadurch gekennzeichnet, dass** die verwendeten Alkylphosphate Verbindungen der allgemeinen Formel (II) sind: 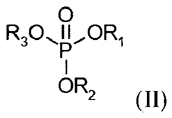 wobei R₁ bis R₃ H, gleiche oder unterschiedliche linerare, verzweigte oder zyklische Alkylreste sein können.

3. Zusammensetzung gemäß Anspruch 1 und 2 enthaltend wenigstens ein Schmelzepolycarbonat der Formel (IV) 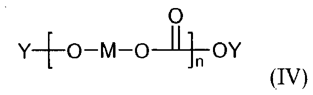 wobei die eckige Klammer sich wiederholende Struklureinheiten bezeichnet, M gleich Ar oder eine multifunktionelle Verbindung A, B, C sowie Verbindung D ist, wobei Ar eine Verbindung sein kann, die durch Formel (VIII) oder (IX) dargestellt wird, 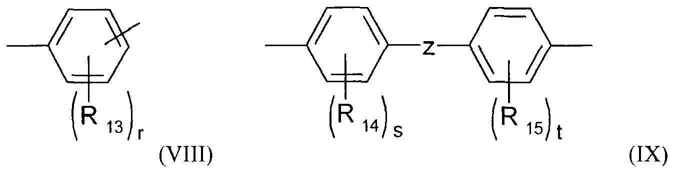 wobei
Z C₁ bis C₈-Allcyliden oder C₅ bis C₁₂-Cycloalkyliden, S, SO₂ oder eine Einfachbindung,
R₁₃, R₁₄, R₁₅ unabhängig voneinander ein substituiertes oder unsubstituiertes C1 - C18 Alkylrest ist, bevorzugt ein substituiertes oder unsubstituiertes Phenyl, Methyl, Propyl, Ethyl, Butyl, C1 oder Br ist und n für 0, 1 oder 2 steht,
r, s, t unabhängig voneinander 0, 1, 2 oder 3 sein kann,
wobei X = Y oder -[MOCOO]ₙ-Y ist,
wobei die multifunktionelle Verbindung A eine Verbindung der Formel 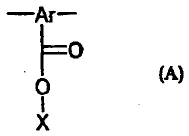 ist, wobei die multifunktionelle Verbindung B eine Verbindung der Formel 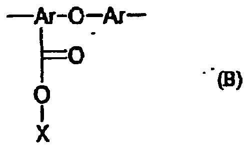 ist, wobei die multifunktionelle Verbindung C eine Verbindung der Formel 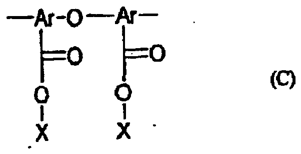 ist, wobei Verbindung D eine Verbindung der Formel 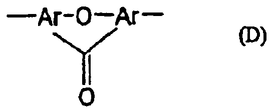 ist, und die Summe von multifunktionellen Verbindungen A, B, C und D ≥ 5 mg/kg ist, wobei Y = H oder eine Verbindung der Formel (X) 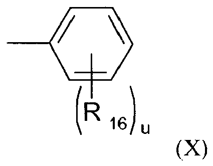 ist, wobei
R₁₆ gleich oder verschieden H, C₁ bis C₂₀-Alkyl, C₆H₅ oder C(CH₃)₂C₆H₅, und
u 0, 1, 2 oder 3 sein kann,
wobei M und Y die oben angegebene Bedeutung haben.

4. Zusammensetzung nach einem der Ansprüche 1 bis 3, **dadurch gekennzeichnet, dass** neben den Phosphinen der Formel (I) auch die entsprechenden Phosphinoxide enthalten sind.

5. Zusammensetzung nach einem der Ansprüche 1 bis 4, **dadurch gekennzeichnet, dass** als Triarylphosphin Triphenylphosphin eingesetzt ist.

6. Zusammensetzung nach einem der Ansprüche 1 bis 5, **dadurch gekennzeichnet, dass** die verwendeten Phosphine in Mengen von 10 bis 2000 mg/kg bezogen auf das Gesamtgewicht der Zusammensetzung eingesetzt werden.

7. Zusammensetzung nach einem der Ansprüche 2 bis 6, **dadurch gekennzeichnet, dass** die verwendeten Alkylphosphate in Mengen von 0,5 bis 500 mg/kg bezogen auf das Gesamtgewicht der Zusammensetzung eingesetzt werden.

8. Zusammensetzung nach einem der Ansprüche 1 bis 7, **dadurch gekennzeichnet, dass** n-Octadecyl-3-(3,5-di-t.butyl-4-hydroxyphenyl)-propionat in Mengen von 10 bis 800 mg/kg, bezogen auf das Gesamtgewicht der Zusammensetzung, eingesetzt wird.

9. Schmelzepolycarbonat-Zusammensetzungen nach einem der Ansprüche 1 bis 8 mit einer Nachvergilbung ΔYI, die Differenz des YI nach Thermoalterung am Normkörper nach ASTM D-1925 und des YI eines spritzfrischen Formkörpers nach einer 1000-Stunden-Lagerung bei 135°C an Luft von weniger als 4,8.

10. Verfahren zur Herstellung von Polycarbonat-Zusammensetzungen nach einem der Ansprüche 1 bis 9, **dadurch gekennzeichnet, dass** das einzusetzende Polycarbonat durch Schmelzeumesterungsreaktionen von Bisphenolen und Kohlesäurediestern hergestellt wird.

11. Verfahren zur Herstellung von Polycarbonat-Zusammensetzungen nach einem der Ansprüche 1 bis 10, **dadurch gekennzeichnet, dass** das einzusetzende Polycarbonat durch Kondensation von Carbonatoligomeren, die Hydroxy- und/oder Carbonatendgruppen enthalten, und Bisphenolen sowie Kohlensäurediestern hergestellt wird.

12. Verfahren zur Herstellung von Polycarbonat-Zusammensetzungen gemäß einem der Ansprüche 1 bis 11, **dadurch gekennzeichnet, dass** die eingesetzten Additive dem Schmelzepolycarbonat-Schmelzestrom hinter der letzten Polykondensationsstufe über einen Seitenextruder zugeführt und anschließend in statischen Mischern vermischt werden.

13. Verfahren zur Herstellung von Polycarbonat-Zusammensetzungen gemäß einem der Ansprüche 1 bis 12, **dadurch gekennzeichnet, dass** eine fertige Mischung von Phosphin mit n-Octadecyl-3-(3,5-di-t.butyl-4-hydroxyphenyl)-propionat dem Schmelzepolycarbonat-Schmelzestrom hinter der letzten Polykondensationsstufe über einen Seitenextruder zugeführt und anschließend in statischen Mischern vermischt wird.

14. Verfahren zur Herstellung von Polycarbonat-Zusammensetzungen gemäß Anspruch 13, **dadurch gekennzeichnet, dass** die Mischung aus Phosphin und n-Octadecyl-3-(3,5-di-t.butyl-4-hydroxyphenyl)-propionat in flüssiger Form über einen Seitenextruder zugeführt und anschließend in statischen Mischern vermischt wird.

15. Formkörper, enthaltend eine Zusammensetzung nach einem der Ansprüche 1 bis 9.

## Claims

1. Composition containing a melt polycarbonate, at least one phosphine and n-octadecyl 3-(3,5-di-tert-butyl-4-hydroxyphenyl)propionate, **characterized in that** the phosphines used are compounds of the formula (I): 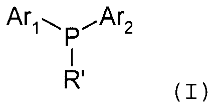 in which Ar₁ and Ar₂ are identical or different unsubstituted or substituted aryl radicals and
R' is an unsubstituted or substituted aryl radical or one of the following radicals (Ia) to (Ih) 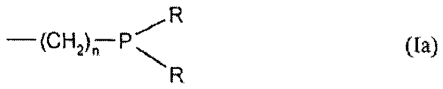 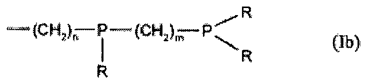 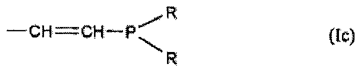 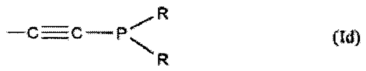 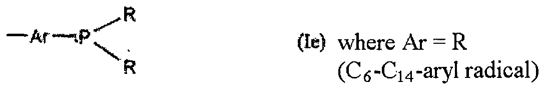 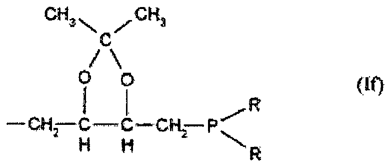 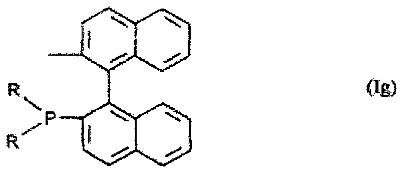 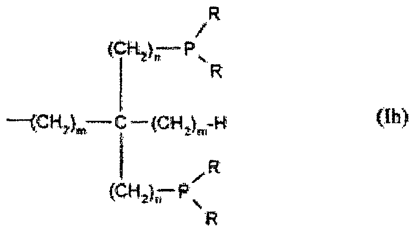 in which R is an unsubstituted or substituted C₆-C₁₄-aryl radical and "n" and "m", in each case independently of one another, are an integer from 1 to 7, it also being possible for the H atoms of the radicals (Ia) to (Ic) to be replaced by substituents,
it also being possible for R' to be substituted or unsubstituted 4-phenylphenyl or substituted or unsubstituted α-naphthyl if Ar in formula (I) is in both cases likewise substituted or unsubstituted 4-phenylphenyl or substituted or unsubstituted α-naphthyl.

2. Composition according to Claim 1, containing at least one alkyl phosphate, **characterized in that** the alkyl phosphates used are compounds of the general formula (II): 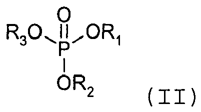 in which R₁ to R₃ may be H, identical or different linear, branched or cyclic alkyl radicals.

3. Composition according to Claims 1 and 2, containing at least one melt polycarbonate of the formula (IV) 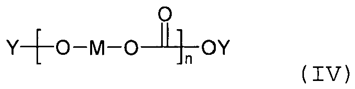 in which the square brackets designate repeating structural units,
M being Ar or a polyfunctional compound A, B, C and compound D,
it being possible for Ar to be a compound which is represented by formula (VIII) or (IX) 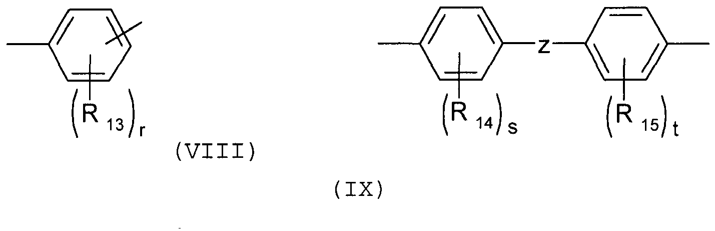 in which
Z is C₁- to C₈-alkylidene or C₅- to C₁₂-cycloalkylidene, S, SO₂ or a single bond,
R₁₃, R₁₄, R₁₅ independently of one another, is a substituted or unsubstituted C1-C18 alkyl radical, preferably a substituted or unsubstituted phenyl, methyl, propyl, ethyl, butyl, Cl or Br, and n represents 0, 1 or 2,
r, s, t independently of one another, may be 0, 1, 2 or 3,
X being Y or -[MOCOO]ₙ-Y,
the polyfunctional compound A being a compound of the formula 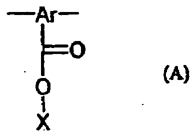 the polyfunctional compound B being a compound of the formula 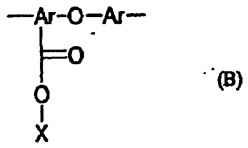 the polyfunctional compound C being a compound of the formula 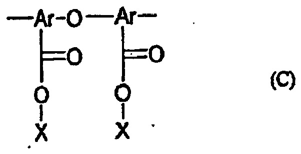 compound D being a compound of the formula 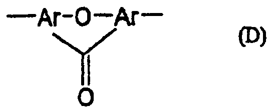 and the sum of polyfunctional compounds A, B, C and D being ≥ 5 mg/kg,
Y being H or a compound of the formula (X) 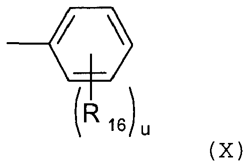 in which
R₁₆ may be identically or differently H, C₁- to C₂₀-alkyl, C₆H₅ or C(CH₃)₂C₆H₅ and
u may be 0, 1, 2 or 3,
M and Y having the abovementioned meaning.

4. Composition according to any of Claims 1 to 3, **characterized in that**, in addition to the phosphines of the formula (I), the corresponding phosphine oxides are also present.

5. Composition according to any of Claims 1 to 4, **characterized in that** the triarylphosphine used is triphenylphosphine.

6. Composition according to any of Claims 1 to 5, **characterized in that** the phosphines used are employed in amounts of 10 to 2000 mg/kg, based on the total weight of the composition.

7. Composition according to any of Claims 2 to 6, **characterized in that** the alkyl phosphates used are employed in amounts of 0.5 to 500 mg/kg, based on the total weight of the composition.

8. Composition according to any of Claims 1 to 7, **characterized in that** n-octadecyl 3-(3,5-di-tert-butyl-4-hydroxyphenyl)propionate is used in amounts of 10 to 800 mg/kg, based on the total weight of the composition.

9. Melt polycarbonate compositions according to any of Claims 1 to 8, having a subsequent yellowing ΔYI, the difference between the YI after thermal ageing of a standard specimen according to ASTM D-1925 and the YI of a fresh injection moulding, after storage for 1000 hours at 135°C in air, of less than 4.8.

10. Process for the preparation of polycarbonate compositions according to any of Claims 1 to 9, **characterized in that** the polycarbonate to be used is prepared by melt transesterification reactions of bisphenols and carbonic acid diesters.

11. Process for the preparation of polycarbonate compositions according to any of Claims 1 to 10, **characterized in that** the polycarbonate to be used is prepared by condensation of carbonate oligomers, which contain hydroxyl and/or carbonate terminal groups, and bisphenols and carbonic diesters.

12. Process for the preparation of polycarbonate compositions according to any of Claims 1 to 11, **characterized in that** the additives used are added to the melt polycarbonate melt stream behind the last polycondensation step via a side extruder and then mixed in static mixers.

13. Process for the preparation of polycarbonate compositions according to any of Claims 1 to 12, **characterized in that** a prepared mixture of the phosphine with n-octadecyl 3-(3,5-di-tert-butyl-4-hydroxyphenyl)propionate is added to the melt polycarbonate melt stream behind the last polycondensation step via a side extruder and then mixed in static mixers.

14. Process for the preparation of polycarbonate compositions according to Claim 13, **characterized in that** the mixture comprising phosphine and n-octadecyl 3-(3,5-di-tert-butyl-4-hydroxyphenyl)propionate is added in liquid form by a side extruder and then mixed in static mixers.

15. Moulding containing a composition according to any of Claims 1 to 9.

## Revendications

1. Composition, contenant au moins un polycarbonate en masse fondue, au moins une phosphine et un 3-(3,5-di-tert-butyl-4-hydroxyphényl)propionate de n-octadécyle, **caractérisée en ce que** la phosphine utilisée réside en des composés de formule (I) : 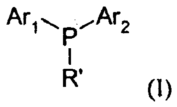 où
Ar₁ et Ar₂ représentent des radicaux aryle identiques ou différents, non substitués ou substitués et
R' représente un radical aryle non substitué ou substitué ou un des radicaux suivants (Ia) à (Ih) 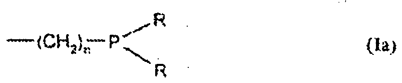 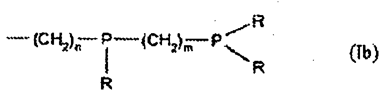 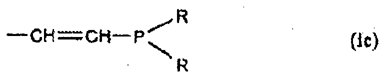 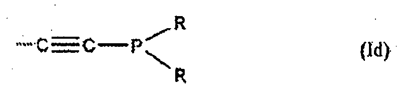 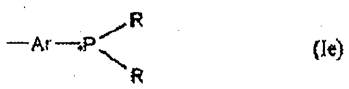
avec Ar = R (radical C₆-C₁₄-aryle) 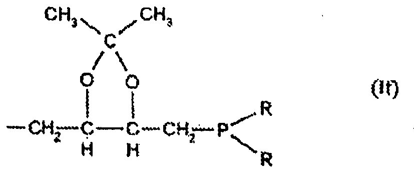 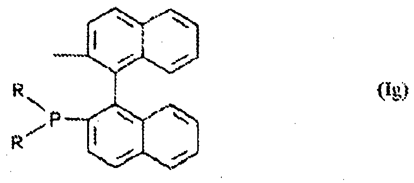 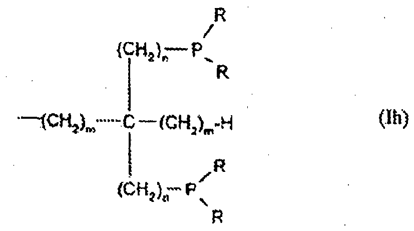 dans lesquels R représente un radical C₆-C₁₄-aryle non substitué ou substitué et "n" et "m" représentent, à chaque fois indépendamment l'un de l'autre, un nombre entier de 1 à 7 et les atomes de H des radicaux (Ia) à (Ic) pouvant encore être remplacés par des substituants et
R' peut encore représenter 4-phénylphényle substitué ou non substitué ou α-naphtyle substitué ou non substitué lorsque deux Ar dans la formule (I) représentent à chaque fois également 4-phénylphényle substitué ou non substitué ou α-naphtyle substitué ou non substitué.

2. Composition selon la revendication 1, contenant au moins un alkylphosphate, **caractérisé en ce que** les alkylphosphates utilisés sont des composés de formule générale (II) : 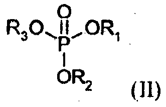 R₁ à R₃ pouvant représenter H, des radicaux alkyle identiques ou différents, linéaires, ramifiés ou cycliques.

3. Composition selon la revendication 1 et 2, contenant au moins un polycarbonate en masse fondue de formule (IV) 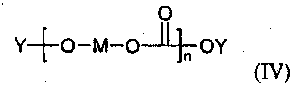 les crochets désignant des unités de structure récurrentes,
M représentant Ar ou un composé multifonctionnel A, B, C ainsi que le composé D, Ar pouvant être un composé représenté par les formules (VIII) ou (IX), 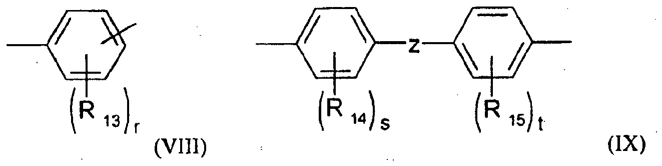 où
Z représente C₁ à C₈-alkylidène ou C₅ à C₁₂-cycloalkylidène, S, SO₂ ou une simple liaison,
R₁₃, R₁₄, R₁₅ représentent, indépendamment les uns des autres, un radical C₁-C₁₈-alkyle substitué ou non substitué, de préférence un radical phényle, méthyle, propyle, éthyle, butyle, substitué ou non substitué, Cl ou Br et n vaut 0, 1 ou 2,
r, s, t indépendamment les uns des autres, peuvent valoir 0, 1, 2 ou 3 ;
où X = Y ou -[MOCOO]ₙ-Y,
le composé multifonctionnel A représentant un composé de formule 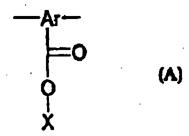 le composé multifonctionnel B représentant un composé de formule 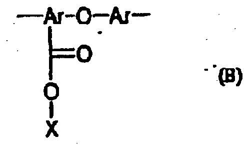 le composé multifonctionnel C représentant un composé de formule 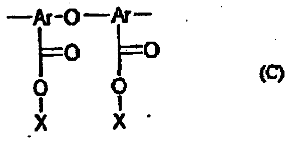 le composé D représentant un composé de formule 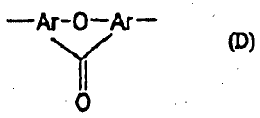 et la somme des composés multifonctionnels A, B, C et D étant ≥ 5 mg/kg, Y = H ou un composé de formule (X) 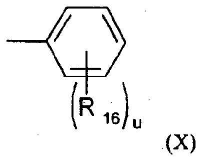 où
R₁₆ est identique ou différent et peut représenter H, C₁ à C₂₀-alkyle, C₆H₅ ou C(CH₃)₂C₆H₅, et
u peut valoir 0, 1, 2 ou 3,
M et Y présentant la signification susmentionnée.

4. Composition selon l'une quelconque des revendications 1 à 3, **caractérisée en ce qu'**outre les phosphines de formule (I), les oxydes de phosphine correspondants sont également contenus.

5. Composition selon l'une quelconque des revendications 1 à 4, **caractérisée en ce qu'**on utilise, comme triarylphosphine, la triphénylphosphine.

6. Composition selon l'une quelconque des revendications 1 à 5, **caractérisée en ce que** les phosphines utilisées sont utilisées en des quantités de 10 à 2000 mg/kg par rapport au poids total de la composition.

7. Composition selon l'une quelconque des revendications 2 à 6, **caractérisée en ce que** les alkylphosphates utilisés sont utilisés en des quantités de 0,5 à 500 mg/kg par rapport au poids total de la composition.

8. Composition selon l'une quelconque des revendications 1 à 7, **caractérisée en ce que** le 3-(3,5-di-tert-butyl-4-hydroxyphényl)propionate de n-octadécyle est utilisé en des quantités de 10 à 800 mg/kg, par rapport au poids total de la composition.

9. Compositions de polycarbonate en masse fondue selon l'une quelconque des revendications 1 à 8, présentant un indice de post-jaunissement ΔYI, c'est-à-dire la différence entre l'indice de jaunissement YI après un thermo-vieillissement sur des éprouvettes normalisées selon la norme ASTM D-1925 et l'indice de jaunissement YI d'un corps moulé fraîchement injecté, après un entreposage pendant 1000 heures à 135°C à l'air, inférieur à 4,8.

10. Procédé pour la préparation de compositions de polycarbonate selon l'une quelconque des revendications 1 à 9, **caractérisé en ce que** le polycarbonate à utiliser est préparé par des réactions de transestérification en masse fondue de bisphénols et de diesters de l'acide carbonique.

11. Procédé pour la préparation de compositions de polycarbonate selon l'une quelconque des revendications 1 à 10, **caractérisé en ce que** le polycarbonate à utiliser est préparé par condensation d'oligomères de carbonate, contenant des groupes terminaux hydroxy et/ou carbonate, et de bisphénols ainsi que de diesters de l'acide carbonique.

12. Procédé pour la préparation de compositions de polycarbonate selon l'une quelconque des revendications 1 à 11, **caractérisé en ce que** les additifs utilisés sont introduits dans le flux de masse fondue de polycarbonate en aval de la dernière étape de polycondensation via une extrudeuse latérale et ensuite mélangés dans des mélangeurs statiques.

13. Procédé pour la préparation de compositions de polycarbonate selon l'une quelconque des revendications 1 à 12, **caractérisé en ce qu'**un mélange fini de phosphine et 3-(3,5-di-tert-butyl-4-hydroxyphényl)propionate de n-octadécyle est introduit dans le flux de masse fondue de polycarbonate en aval de la dernière étape de polycondensation via une extrudeuse latérale et ensuite mélangé dans des mélangeurs statiques.

14. Procédé pour la préparation de compositions de polycarbonate selon la revendication 13, **caractérisé en ce que** le mélange de phosphine et de 3-(3,5-di-tert-butyl-4-hydroxyphényl)propionate de n-octadécyle est introduit sous forme liquide via une extrudeuse latérale et ensuite mélangé dans des mélangeurs statiques.

15. Corps moulés contenant une composition selon l'une quelconque des revendications 1 à 9.
